# EUROPEAN PATENT APPLICATION

(11) **EP 4 841 816 A1**
(43) Date of publication of application: **18.11.2026**
(21) Application number: 25880164.6
(22) Date of filing: 19.08.2025
(51) Int. Cl.: H01M 50/59, H01M 50/586, H01M 50/536, H01M 50/178, H01M 50/533, H01M 10/04

(54) **SECONDARY BATTERY AND METHOD FOR MANUFACTURING SECONDARY BATTERY**

(30) Priority: 14.10.2024 KR 20240139498
(71) Applicant: LG Energy Solution, Ltd., Seoul 07335 (KR)
(72) Inventor: JUNG, Hyunok, Daejeon 34122 (KR); KIM, Euitea, Daejeon 34122 (KR); YOO, Dongik, Daejeon 34122 (KR); JUNG, Hyo Seung, Daejeon 34122 (KR)
(74) Representative: Plasseraud IP
(86) International application number: PCT/KR2025/012562
(87) International publication number: WO 2026/084226

(57) **Abstract**

A secondary battery according to one embodiment comprises: an electrode assembly comprising a plurality of electrodes, an electrode tab extending from at least one of the plurality of electrodes, and a separator interposed between the plurality of electrodes; an electrode lead electrically connected to the electrode tab; and an insulating member including a first surface facing the electrode lead and a second surface opposite to the first surface, and disposed between the plurality of electrodes and the electrode lead, wherein the insulating member includes an opening configured to allow at least a portion of the electrode tab to pass between the first surface and the second surface, thereby increasing space utilization of a battery case and increasing energy density of a battery cell accommodated in the battery case. Other embodiments are possible.

## Description

### Technical Field

The present disclosure claims the benefit based on Korean Patent Application No. 10-2024-0139498 filed on October 14, 2024, which is incorporated herein by reference in its entirety.

The present disclosure relates to a secondary battery and a method for manufacturing a secondary battery, and more specifically, relates to a technology manufacturing a secondary battery to improve space efficiency of a battery case and increase energy density of a battery cell accommodated within the battery case.

### Background Art

Secondary batteries refer to batteries capable of charging and discharging. Generally, types of secondary batteries include nickel-cadmium batteries, nickel-metal hydride batteries, lithium-ion batteries, and lithium-ion polymer batteries. Such secondary batteries are used not only in small devices, such as digital cameras, P-DVDs, MP3Ps, cellphones, PDAs, portable game devices, power tools, and e-bikes, but also in large-scale products requiring high output, such as electric vehicles or hybrid vehicles, and power storage devices for storing surplus generated power or renewable energy, as well as in backup power storage devices.

To manufacture such a secondary battery, an electrode active material slurry is first applied to a positive electrode current collector and a negative electrode current collector to produce a positive electrode and a negative electrode, and an electrode assembly of a predetermined shape may be formed by stacking the positive electrode and the negative electrode on both sides of a separator. Then, a process of housing the electrode assembly in a case, injecting an electrolyte, and sealing may be performed.

Meanwhile, in conventional secondary batteries, after a first welding process is performed on an electrode tab extending from an electrode (for example, a positive electrode and a negative electrode), a second welding process is carried out to connect the electrode tab to an electrode lead serving as a terminal of a secondary battery, and particularly, a predetermined gap between a region welded in the first welding process and a region welded in the second welding process is required.

Accordingly, there is a limitation in simplifying the process of manufacturing secondary batteries or maximizing energy density by reducing a size of a secondary battery.

### Detailed Description of the Invention

### Technical Goals

The present disclosure is to improve space efficiency of a battery case using an integral lead member and to provide secondary batteries and a method of manufacturing secondary batteries to improve energy density of a battery cell accommodated within the battery case.

Technical goals to be achieved by the example embodiments are not limited thereto, and other technical goals may be inferred from example embodiments below.

### Technical solutions

A secondary battery according to an example embodiment of the present disclosure may comprise an electrode assembly including a plurality of electrodes, an electrode tab extending from at least one of the plurality of electrodes, and a separator interposed between the plurality of electrodes, an electrode lead electrically connected to the electrode tab, and an insulating member including a first surface facing the electrode lead and a second surface facing the first surface, and disposed between the plurality of electrodes and the electrode lead. The insulating member may include an opening through which at least a portion of the electrode tab between the first surface and the second surface passes.

In addition, the secondary battery may further comprise a battery case that accommodates the electrode assembly and has a sealing portion formed at an edge thereof. The electrode lead may comprise a first portion protruding outside the battery case, a second portion disposed perpendicularly to the first portion inside the battery case, and a third portion overlapping with the sealing portion of the battery case.

In addition, the second portion may include a region overlapping with the electrode tab. The region in which the second portion and the electrode tab overlap may be coupled to each other by a single welding process.

In addition, the region in which the second portion and the electrode tab overlap may be disposed in a direction perpendicular to the first portion by being bent at a position corresponding to the opening of the insulating member after the welding process.

In addition, the insulating member may be disposed in a direction perpendicular to the first portion and may form an integral lead member by being coupled to one surface of the second portion.

In addition, the insulating member may have a size and a shape corresponding to a cross-sectional portion of the electrode assembly.

In addition, the secondary battery may further comprise a battery case that accommodates the electrode assembly and has a sealing portion formed at an edge thereof. The insulating member, the electrode tab, and a portion of the electrode lead welded and coupled to the electrode tab may be positioned inside the battery case. Another portion of the electrode lead may be disposed outside the battery case.

In addition, the insulating member may include a groove portion in which the electrode lead is accommodated at least partially. At least a portion of the electrode tab may be electrically coupled to the electrode lead at a position corresponding to the groove portion.

In addition, a depth of the groove portion may be greater than a thickness of the electrode lead.

In addition, the thickness of the electrode lead may be smaller than a thickness of the insulating member.

A method of manufacturing a secondary battery according to an example embodiment of the present disclosure may comprise forming an integral lead member by coupling an electrode lead and an insulating member, positioning an electrode tab of an electrode assembly to pass through an opening formed on one side of the insulating member, welding the integral lead member to an electrode tab of an electrode assembly, rotating the integral lead member, which is welded and coupled to the electrode tab, by 90 degrees through bending a portion of a region of the electrode tab, and disposing the electrode assembly inside a battery case and sealing an edge of the battery case.

In addition, the insulating member may include a first surface coupled to the electrode lead and a second surface facing the first surface. The welding may include welding a portion in which the electrode tab, which passes through the opening, overlaps with the integral lead member on the first surface.

In addition, the rotating of the integral lead member, which is welded and coupled to the electrode tab, by 90 degrees may include rotating the integral lead member, which is welded and coupled to the electrode tab, by 90 degrees in a direction toward the electrode assembly by bending the electrode tab with respect to the opening accommodating the electrode tab.

In addition, the sealing may include sealing the edge of the battery case in a state in which a portion of the integral lead member protrudes outside the battery case.

### Effects of the Invention

According to the present disclosure, it is possible to improve space efficiency of a battery case and increase energy density of a battery case accommodated within the battery case by using an integral lead that includes an insulating member to prevent an electrical short with an electrode and an L-shaped conductive member.

In addition, according to the present disclosure, it is possible to maintain a shape of a battery case against an external shock and to prevent gas generated from an electrode assembly from being vented in a direction toward an electrode lead by using an integral lead including an insulating member.

In addition, according to the present disclosure, it is possible to minimize damage to a battery case and to prevent an internal short circuit within a secondary battery by preventing an electrode tab from coming into contact with the battery case.

Furthermore, according to the present disclosure, it is possible to reduce manufacturing costs of secondary batteries by simplifying a manufacturing process for secondary batteries.

Effects of the present disclosure are not limited to the aforementioned effects, and other effects not mentioned will be clearly understood by those skilled in the art from the description of the claims.

### Brief Description of Drawings

FIG. 1 is a perspective view schematically illustrating a secondary battery according to an example embodiment of the present disclosure.
FIG. 2 is a schematic cross-sectional view taken along a line I-I of FIG. 1.
FIGS. 3 to 6 are exemplary drawings of various example embodiments illustrating an enlarged view of a region A marked by a dotted circle of FIG. 2.
FIG. 7 is a schematic perspective view illustrating an enlarged view of an electrode tab end portion, an electrode lead, and an insulating member of a secondary battery illustrated in FIG. 2.
FIG. 8 is a schematic cross-sectional view of a secondary battery according to an example embodiment of the present disclosure.
FIG. 9 is a flowchart illustrating a method of manufacturing a secondary battery according to an example embodiment of the present disclosure.
FIGS. 10 to 13 are diagrams sequentially illustrating a method of manufacturing a secondary battery according to an example embodiment of the present disclosure.

### Mode for Carrying Out the Invention

Terms used in the example embodiments are selected, as much as possible, from general terms that are widely used at present while taking into consideration the functions obtained in accordance with the present disclosure, but these terms may be replaced by other terms based on intentions of those skilled in the art, customs, emergence of new technologies, or the like. Also, in a particular case, terms that are arbitrarily selected by the applicant of the present disclosure may be used. In this case, the meanings of these terms may be described in corresponding description parts of the disclosure. Accordingly, it should be noted that the terms used herein should be construed based on practical meanings thereof and the whole content of this specification, rather than being simply construed based on names of the terms.

In the entire specification, when an element is referred to as "including" another element, the element should not be understood as excluding other elements so long as there is no special conflicting description, and the element may include at least one other element. In addition, the terms "unit" and "module", for example, may refer to a component that exerts at least one function or operation, and may be realized in hardware or software, or may be realized by combination of hardware and software.

The expression "at least one of A, B, and C" may indicate the following meaning including: A alone; B alone; C alone; both A and B together; both A and C together; both B and C together; or all three of A, B, and C together.

In the following description, example embodiments of the present disclosure will be described in detail with reference to the drawings so that those skilled in the art can easily carry out the present disclosure. The present disclosure may be embodied in many different forms and is not limited to the example embodiments described herein.

Hereinafter, referring to diagrams, example embodiments of the present disclosure, which relates to a secondary battery and a method of manufacturing a secondary battery, will be described in detail.

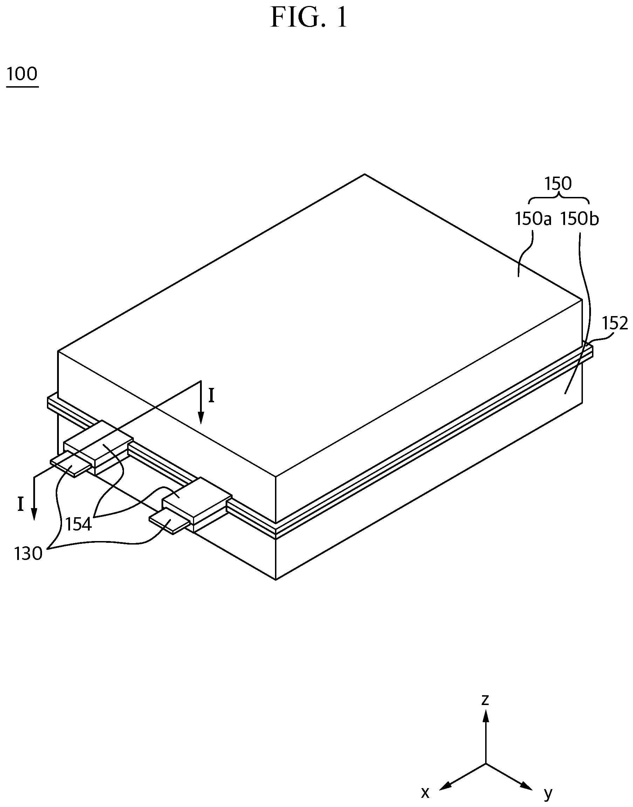

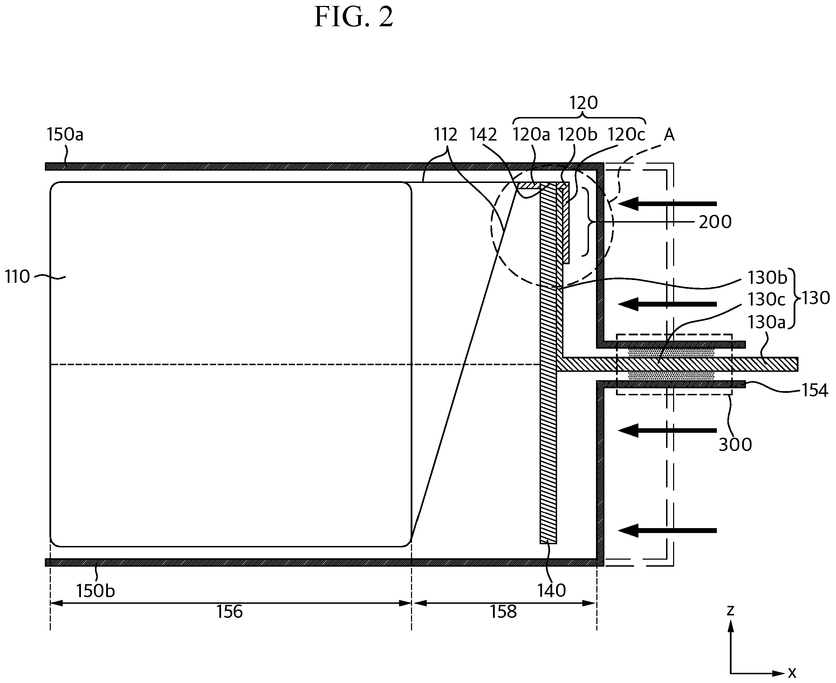

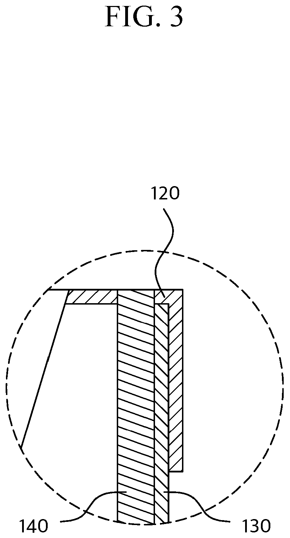

FIG. 1 is a perspective view schematically illustrating a secondary battery according to an example embodiment of the present disclosure. FIG. 2 is a schematic cross-sectional view taken along a line I-I of FIG. 1. FIGS. 3 to 6 are exemplary drawings of various example embodiments illustrating an enlarged view of a region A marked by a dotted circle of FIG. 2.

Referring to FIGS. 1 and 2, a secondary battery 100 according to an example embodiment of the present disclosure may include an electrode assembly 110, an electrode tab end portion 120 formed from a plurality of electrode tabs 112, an electrode lead 130, an insulating member 140, and a battery case 150 accommodating the electrode assembly 110.

The battery case 150 according to an example embodiment of the present disclosure may be formed by coupling an upper case 150a in which an upper cup portion is formed and a lower case 150b in which a lower cup portion is formed. At this point, the upper cup portion and the lower cup portion within the battery case 150 may be disposed to face each other. For example, a cup portion included in the upper case 150a and the lower case 150b may be formed by molding a pouch sheet.

The pouch sheet may be a laminate sheet formed by stacking layers of different materials. As an example, the pouch sheet may have a multilayer structure in which a lower resin layer, made of insulating materials such as polyethylene terephthalate (PET) or nylon, an aluminum metal layer, which maintains mechanical strength and prevents the penetration of moisture and oxygen, and an upper resin layer, made of a polyolefin-based material having heat-sealing properties to serve as a sealing layer, are stacked.

The battery case 150 may include accommodating portions 156 and 158, a bonding portion 152, and a sealing portion 154.

In an example embodiment, the accommodating portions 156 and 158 may accommodate the electrode assembly 110, the electrode tab end portion 120, the electrode lead 130, and the insulating member 140.

For example, the accommodating portions 156 and 158, as what is illustrated in FIG. 2, may be divided into an electrode assembly accommodating portion 156 and an electrode connection portion 158. The electrode assembly accommodating portion 156 may accommodate the electrode assembly 110 and an electrolyte. The electrode connection portion 158 may accommodate various elements to connect the electrode assembly 110 and an external circuit. For example, the electrode connection portion 158 may be referred to as a "terrace."

For example, the electrode connection portion 158 may accommodate the electrode tab end portion 120, the electrode lead 130, and the insulating member 140 that will be described in detail below.

Meanwhile, in the secondary battery 100, space efficiency may be different depending on a method of disposing the electrode tab end portion 120, the electrode lead 130, and the insulating member 140 accommodated within the electrode connection portion 158. For example, reducing an overall width of the electrode connection portion 158 may improve space efficiency, thereby increasing energy density.

The accommodating portions 156 and 158 may be formed by disposing the upper cup portion of the upper case 150a and a lower cup portion of the lower case 150b to face each other. In other words, the accommodating portions 156 and 158 may be an inner space that is formed by the upper cup portion and the lower cup portion.

The bonding portion 152 may be an edge at which the upper case 150a and the lower case 150b are in contact to form the battery case 150. For example, the edge may be a flat portion extending outside the cup portions of the upper case 150a and the lower case 150b.

For example, the battery case 150 may be formed by disposing the upper case 150a and the lower case 150b to face each other and sealing between the upper case 150a and the lower case 150b by bonding the bonding portion 152, which is the edge at which the upper case 150a and the lower case 150b are in contact.

In an example embodiment, the method of bonding the bonding portion 152 may be a heat fusion method, but is not limited thereto, and other random methods may be used.

The sealing portion 154 may be a portion overlapping with a portion of the electrode lead 130 positioned between an inner side and an outer side of the battery case 150, and may be sealed together with a portion of the electrode lead 130 in a first sealing region 300. The sealing portion 154 may be an edge protruding in one direction from the upper case 150a and the lower case 150b. At this point, the sealing portion 154 may be formed to be flat, being coplanar with the bonding portion 152. The sealing portion 154 may seal a portion of the electrode lead 130 together with the upper case 150a and the lower case 150b to protect the electrode assembly 110 within the battery case 150. In addition, the sealing portion 154 may prevent an electrolyte or a substance such as a gas within the secondary battery 100 from leaking to the outside.

The method of sealing the sealing portion 154 may be a heat fusion method, but is not limited thereto, and other random methods may be used.

In this way, the battery case 150 may be sealed by the bonding portion 152 and the sealing portion 154 and completed while accommodating elements such as the electrode assembly 110, the electrode tab end portion 120, the electrode lead 130, and the insulating member 140 in the accommodating portions 156 and 158 formed by the upper cup portion and the lower cup portion.

The electrode assembly 110 according to an example embodiment of the present disclosure may be formed in a flat-plate structure of a rectangular parallelepiped.

In an example embodiment, the electrode assembly 110 may include a plurality of electrodes, a separator interposed between the plurality of electrodes, and the electrode tab 112 extending from at least one of the plurality of electrodes. At this point, the plurality of electrodes may include a positive electrode and a negative electrode.

For example, the electrode assembly 110 may include a stacking portion in a flat-plate shape in which two or more structures, each including the separator interposed between the positive electrode and the negative electrode, are stacked repetitively, and the electrode tab 112 formed on a positive electrode current collector and a negative electrode current collector may protrude on a relatively narrow surface of the electrode assembly 110. Each of the protruding plurality of electrode tabs 112 of the same polarity may form a group, and each of the plurality of electrode tabs 112 may be electrically connected to the electrode lead 130.

A plurality of electrodes may include a positive electrode and a negative electrode. For example, the positive electrode may be an electrode in which a positive active material, such as lithium cobalt oxide (LiCoO₂), is coated on an aluminum current collector, and the negative electrode may be an electrode in which a negative active material, such as graphite or silicon, is coated on a copper current collector.

The separator may prevent an electrical short between electrodes by being interposed between the plurality of electrodes. The separator, made of an insulating material, may electrically insulate the positive electrode from the negative electrode. For example, the separator may be formed of a polyolefin-based resin, such as polyethylene and polypropylene, having a microporous structure.

Meanwhile, the electrode assembly 110 may be formed in various shapes. For example, the electrode assembly 110 may be formed in a jelly-roll shape by rolling the positive electrode, the negative electrode, and the separator interposed between the positive electrode and the negative electrode. As another example, the electrode assembly 110 may be formed in a stack shape by stacking the positive electrode, the negative electrode, and the separator between the positive electrode and the negative electrode.

The electrode tab 112 may be a conductive member extending from an electrode and connected to the electrode lead 130, conducting current flowing through the electrode to an external circuit.

A plurality of electrode tabs 112 may be drawn out from the electrode assembly 110, and the plurality of electrode tabs 112 may be welded together to form the electrode tab end portion 120. At this point, the plurality of electrode tabs 112 of the same polarity may be grouped to form the electrode tab end portion 120. For example, a predetermined electrode tab end portion 120 may extend from a plurality of electrodes of the same polarity and may be composed of the plurality of electrode tabs 112 protruding toward one side of the electrode assembly 110.

Meanwhile, the secondary battery 100 according to an example embodiment of the present disclosure may be in a unidirectional structure in which the plurality of electrode tabs 112 extend from one side of the electrode assembly 110, or in a bidirectional structure in which the plurality of electrode tabs 112 extend from both sides of the electrode assembly 110.

The electrode tab end portion 120 may be composed of a bundle of the plurality of electrode tabs 112 extending from the plurality of electrodes. The electrode tab end portion 120 may include a positive electrode tab end portion and a negative electrode tab end portion depending on a polarity of an electrode. At this point, the positive electrode tab end portion may refer to a group of a plurality of positive electrode tabs extending from a plurality of positive electrodes, and the negative electrode tab end portion may refer to a group of a plurality of negative electrode tabs extending from a plurality of negative electrodes. At this point, as an example, the positive electrode tab may be made of a material such as aluminum, and the negative electrode tab may be made of a material such as copper.

In an example embodiment of the present disclosure, the electrode tab end portion 120 may be divided into a first region 120a, a second region 120b, and a third region 120c with respect to a point at which the electrode tab end portion 120 is bent.

The first region 120a may be a portion directly connected to the electrode tab 112 of the electrode assembly 110. For example, the first region 120a may be a portion in which the plurality of electrode tabs 112 extending from the plurality of electrodes are grouped to form an end portion. Meanwhile, a portion of the first region 120a may be disposed to pass through an opening 142 of the insulating member 140 described later.

The second region 120b may be a portion being bent at the opening 142 of the insulating member 140. For example, the second region 120b may serve as a reference point at which the electrode tab end portion 120 is bent by 90 degrees to face the electrode assembly 110. In an example embodiment, the second region 120b may be a region configured to improve space efficiency of the electrode connection portion 158 within the battery case 150 and to increase the energy density.

The third region 120c may be a portion parallel to one surface (for example, a y-z plane) of the electrode assembly 110, as a portion of the electrode tab end portion 120 is bent with respect to the second region 120b. For example, the third region 120c may provide an electrical connection to an external circuit by being coupled to a portion of the electrode lead 130. At this point, the third region 120c and a portion of the electrode lead 130 may be bonded by welding. However, the method is not limited thereto, and the electrode tab end portion 120 and the electrode lead 130 may be coupled by a different random method.

The electrode lead 130 according to an example embodiment of the present disclosure may provide an electrical connection to an external circuit by being coupled to the electrode tab 112 within the secondary battery 100.

For example, the electrode lead 130 may provide an electrical connection to an external circuit by being coupled to the electrode tab 112 by at least one welding process. For example, after the plurality of electrode tabs 112 are welded to one another to form the electrode tab end portion 120 (for example, a first welding process), the electrode lead 130 may be coupled to the electrode tab end portion 120 composed of the plurality of electrode tabs 112 (for example, a second welding process). As another example, the electrode lead 130 may provide an electrical connection to an external circuit by being coupled to the plurality of electrode tabs 112 (for example, a second welding process) without forming the electrode tab end portion 120 (for example, a first welding process). However, the method of coupling to one another is not limited to welding, and the electrode lead 130 may be coupled to the electrode tab 112 or the electrode tab end portion 120 by a different random method.

In an example, when the electrode lead 130 and the electrode tab 112 are bonded by only a single welding process, an effect of manufacturing time reduction and cost reduction may be achieved by simplifying the process. In another example, when the electrode lead 130 and the electrode tab 112 are bonded by two or more welding processes, the electrode lead 130 and the electrode tab 112 may be bonded more strongly to achieve stable electrical connection.

The electrode lead 130 may include a positive electrode lead and a negative electrode lead. For example, the positive electrode lead may be connected to a plurality of positive electrode tabs extending from a plurality of positive electrodes, and the negative electrode lead may be connected to a plurality of negative electrode tabs extending from a plurality of negative electrodes. For example, the electrode lead 130 may be directly connected to a positive electrode tab end portion or a negative electrode tab end portion.

For example, the positive electrode lead and the negative electrode lead may be made of a metal in a thin plate shape. For example, the positive electrode lead may be made of an aluminum material, and the negative electrode lead may be made of a copper material. However, the material is not limited thereto.

In an example embodiment of the present disclosure, the positive electrode lead and the negative electrode lead may be disposed side by side in the same direction. However, the configuration of the present disclosure is not limited thereto, and the positive electrode lead and the negative electrode lead may be disposed to face the opposite direction.

In an example embodiment of the present disclosure, the electrode lead 130 may be in an L shape. As the electrode lead 130 connected to the electrode tab end portion 120 has a bent L-shaped form, not an I-shaped form, the proportion of the electrode tab-lead assembly within the battery case 150 may be reduced. In addition, as a bending process to separately bend the electrode lead 130 is not required, the yield in the manufacturing process may be increased. As such, the L shape of the electrode lead 130 may be desirable to improve space efficiency of the battery case 150. However, the shape is merely an example, and the electrode lead 130 may have other random shapes to improve space efficiency within the battery case 150.

In an example embodiment, the electrode lead 130 may be divided into a first portion 130a, a second portion 130b, and a third portion 130c.

The first portion 130a may be a portion protruding outside the battery case 150. For example, the first portion 130a of the electrode lead 130 may be positioned outside the case 150 of the secondary battery 100 to provide connection between each electrode constituting the secondary battery 100 and an external circuit (for example, a printed circuit board (PCB)).

The second portion 130b may be a portion disposed perpendicular to the first portion 130a inside the battery case 150. For example, the second portion 130b may be a portion coupled to one surface (for example, a first surface) of the insulating member 140 inside the battery case 150. The second portion 130b may be coupled within a region overlapping with the third region 120c of the electrode tab end portion 120. At this point, the overlapping region may be a welding region 200 and bonded by welding.

As such, in an example embodiment, the electrode lead 130 may include the second portion 130b disposed substantially parallel to an end surface (for example, the y-z plane) of the electrode assembly 110, and may be coupled to the electrode tab end portion 120 at the second portion 130b to maximize space utilization and reduce a length of one direction (for example, a direction x) of the secondary battery 100. In this way, the secondary battery 100 with improved energy density may be provided.

The third portion 130c may be a portion overlapping with the sealing portion 154 of the battery case 150. The third portion 130c may be coupled to the sealing portion 154 and sealed in a region overlapping with the sealing portion 154. At this point, the region overlapping with the sealing portion 154 may be the first sealing region 300, which is sealed by a welding process. As the electrode lead 130 is sealed by the sealing portion 154, an electrolyte may be prevented from leaking to the outside and external air may be blocked from entering the battery case 150. In addition, the sealing portion 154 may provide electrical insulation to prevent the electrode lead 130 from being in electrical contact with the electrode assembly 110 and the external environment, thereby structurally maintaining the hermeticity of the battery case 150 and enhancing the safety of the secondary battery 100.

Meanwhile, in an example embodiment, a height from a bottom surface of the lower case 150b to the third portion 130c may be configured to correspond to a height from a bottom surface of the lower case 150b to the sealing portion 154, so that the third portion 130c of the electrode lead 130 may be accommodated between the sealing portion 154 of the upper case 150a and the lower case 150b.

The insulating member 140 according to an example embodiment of the present disclosure may prevent an electrical short circuit by being disposed between the electrode assembly 110 and the electrode lead 130. For example, the insulating member 140 may prevent an internal short circuit that may occur in a welded portion by being contact with the welded portion of the electrode tab end portion 120 and the electrode lead 130.

The insulating member 140 may be a plastic structure with electrical insulation. For example, the insulating member 140 may be an insulating plastic made of polypropylene (PP), polyethylene (PE), or polyimide, or ceramic.

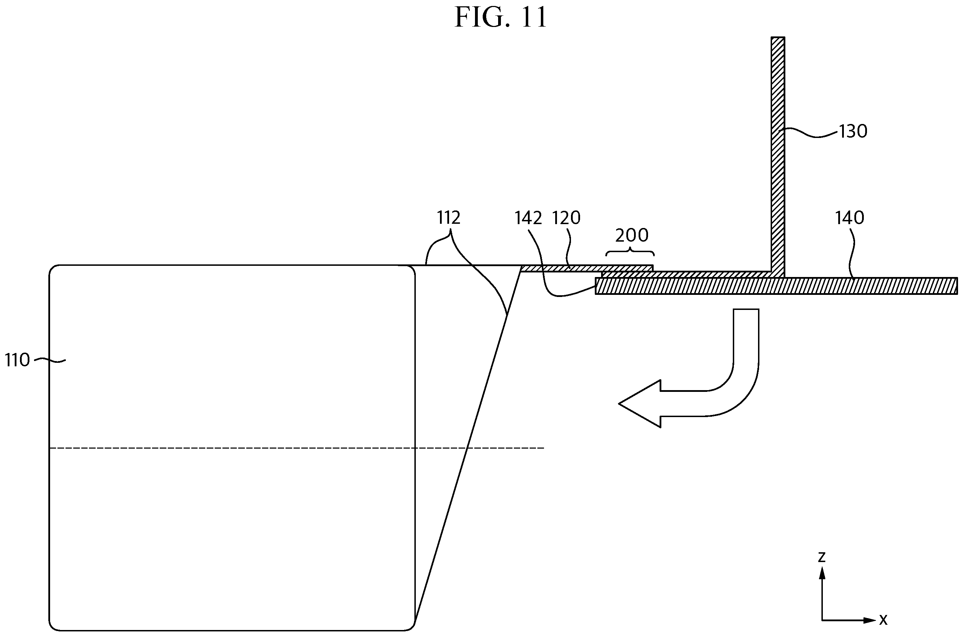

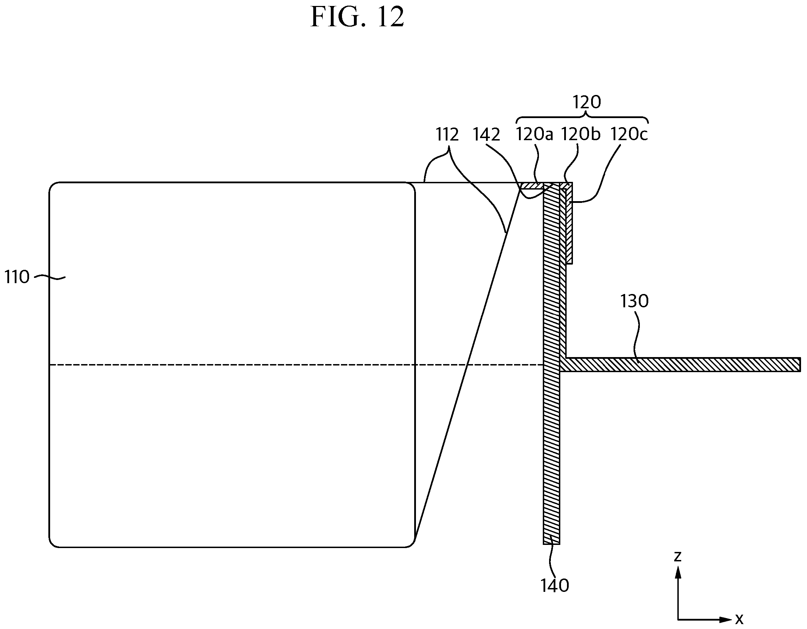

The insulating member 140 may be integrated with the electrode lead 130 in an L shape. For example, the insulating member 140 may be disposed perpendicular to the first portion 130a of the electrode lead 130. The insulating member 140 may form an integral lead member by being pre-attached to one surface of the second portion 130b of the electrode lead 130 in various methods (for example, bonding with an adhesive tape, bonding by mechanical coupling, or bonding by welding). For example, the integral lead member may be coupled to the electrode tab end portion 120 in a region in which the second portion 130b of the electrode lead 130 and the third region 120c of the electrode tab end portion 120 overlap. The electrode tab end portion 120 and the integral lead member that are coupled to each other may be bent in the second region 120b of the electrode tab end portion 120 and disposed on the electrode connection portion 158 of the battery case 150 so that one surface (for example, a second surface) of the insulating member 140 is parallel to the electrode assembly 110 (see FIG. 11 and FIG. 12).

The insulating member 140 may include the opening 142 that may accommodate the electrode tab end portion 120. For example, the opening 142 of the insulating member 140 may accommodate the first region 120a of the electrode tab end portion 120. At this point, the opening 142 of the insulating member 140 may be formed on one end of the insulating member 140. As the electrode tab end portion 120 and the integral lead member coupled to each other are bent by 90 degrees in a direction (for example, a clockwise direction with respect to FIG. 11) closer to the electrode assembly 110 from the second region 120b of the electrode tab end portion 120, the first region 120a of the electrode tab end portion 120 may be engaged with the opening 142. In this way, as the first region 120a of the electrode tab end portion 120 is surrounded by the opening 142, the electrode tab end portion 120 and the battery case 150 may maintain a predetermined distance, preventing electrical short circuit therebetween.

Meanwhile, in various example embodiments, the insulating member 140 may include a groove portion (not illustrated) that may accommodate the electrode lead 130.

For example, the insulating member 140 may include the groove portion so that the second portion 130b of the electrode lead 130 coupled to the insulating member 140 does not protrude outside the one surface (for example, the first surface) of the insulating member 140.

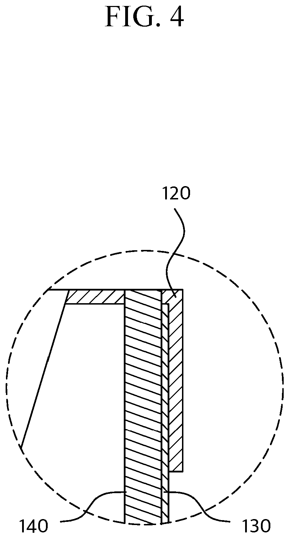

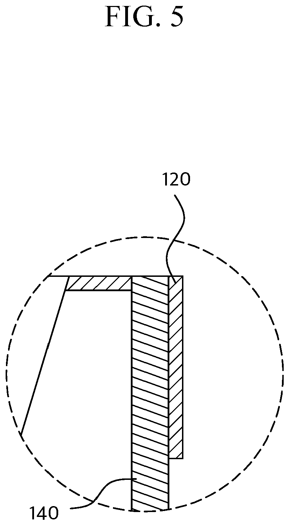

For example, as what is illustrated in FIGS. 4 and 5, the second portion 130b of the electrode lead 130 may accommodate in the groove portion of the insulating member 140, thereby removing or reducing a step difference between the second portion 130b of the electrode lead 130 and the insulating member 140. As a result, the size (for example, a length in an x-axis direction of FIG. 2) of the integral lead member formed by coupling the electrode lead 130 and the insulating member 140 may decrease, thereby improving space efficiency of inside a battery cell.

At this point, a shape of the groove portion according to various example embodiments may be designed corresponding to a shape of the electrode lead 130.

For example, as the groove portion is positioned adjacent to the opening 142 of the insulating member 140, the electrode tab end portion 120 bent at a position corresponding to the opening 142 may be configured to be coupled to the electrode lead 130 accommodated in the groove portion. For example, the groove portion in which the electrode lead 130 is accommodated may be connected to the opening 142 in which the electrode tab end portion 120 is accommodated, or configured to be separate and be perpendicular to the opening 142. However, it is merely an example, and the electrode lead 130 may be inserted into the insulating member 140 in a different random method and be manufactured in an integral lead member.

Meanwhile, a thickness of the insulating member 140 according to an example embodiment may be greater than a thickness of the electrode lead 130.

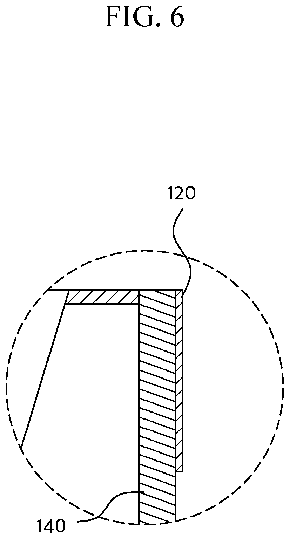

For example, as what is illustrated in FIGS. 5 and 6, when the second portion 130b of the electrode lead 130 is inserted into the groove portion of the insulating member 140, a depth of the groove portion of the insulating member 140 may be greater than or the same as the thickness of the electrode lead 130 to minimize a step difference between the insulating member 140 and the electrode lead 130.

For example, the depth of the groove portion of the insulating member 140 may correspond to the thickness of the electrode lead 130.

As another example, the groove portion of the insulating member 140 may have a depth to accommodate both the electrode lead 130 and the electrode tab end portion 120 welded and coupled to the electrode lead 130. For example, the depth of the groove portion of the insulating member 140 may correspond to the sum of the thickness of the electrode lead 130 and the thickness of the electrode tab end portion 120.

Meanwhile, the insulating member 140 may be provided with a groove portion of a depth that may accommodate the entire electrode lead 130 (or, both the electrode lead 130 and the electrode tab end portion 120), and may have a thickness that may stably support the configuration of the electrode lead 130 and the electrode tab end portion 120 when the electrode lead 130 is welded to the electrode tab end portion 120. As an example, the thickness of the insulating member 140 may be two times or more than twice the thickness of the electrode lead 130.

As another example, when at least a portion of a thickness of the second portion 130b of the electrode lead 130 is inserted into the groove portion of the insulating member 140, the thickness of the insulating member 140 may be the same as or similar to the thickness of the electrode lead 130. As such, the thickness of the insulating member 140 may be variously set depending on the insertion depth of the electrode lead 130, and the thickness of the insulating member 140 may be additionally adjusted as needed.

According to an example embodiment, a depth of the groove portion of the insulating member 140 may be greater than the thickness of the electrode lead 130. For example, as what is illustrated in FIG. 6, when the electrode tab end portion 120 and an integral lead member are coupled to each other, the depth of the groove portion of the insulating member 140 may be designed to be greater than the thickness of the electrode lead 130 to minimize or remove a step difference that may occur at the coupling portion of the electrode tab end portion 120 and the integral lead member. As a result, at least a portion of the electrode lead 130 may be completely inserted into the groove portion of the insulating member 140. Subsequently, the third region 120c of the electrode tab end portion 120 may be welded at a region overlapping with the second portion 130b of the electrode lead 130 inserted into the groove portion of the insulating member 140, and a portion of the electrode tab end portion 120 may be surrounded by the insulating member 140. Such a design may not only implement a sturdy coupling between the electrode lead 130 and the electrode tab end portion 120 but also prevent an electrical short circuit between elements and improve space efficiency within the battery case 150.

However, that forming the groove portion in the insulating member 140 as above may be merely an example, and a separate groove portion may not be formed in the insulating member 140. For example, as what is illustrated in FIG. 3, the electrode lead may be coupled to one surface (for example, a first surface) of the insulating member to form an integral lead member. Such a shape may vary depending on a design, and accordingly, a shape or a configuration of the insulating member 140 may also change.

In an example embodiment, the insulating member 140 may have various sizes and shapes. For example, the insulating member 140 may have a size and a shape corresponding to a cross section of the electrode assembly 110 accommodated within the battery case 150. In this way, the insulating member 140 and the electrode assembly 110 may be more closely attached to each other within the battery case 150 to reduce a risk of an electrical short circuit, and energy density of the secondary battery 100 may increase by using the inner space efficiently.

As another example, a size and a shape of a cross section of the insulating member 140 may vary depending on a shape of a cup portion (for example, the accommodating portions 156 and 158) of the battery case 150. As an example, when the accommodating portions 156 and 158 of the battery case 150 are in various shapes such as a circular shape and an elliptical shape, the insulating member 140 may be designed to correspond to a shape of the accommodating portions 156 and 158.

For example, the insulating member 140 may serve as a support structure within the battery case 150. In this way, the insulating member 140 may prevent the battery case 150 from being bent or deformed by an external shock.

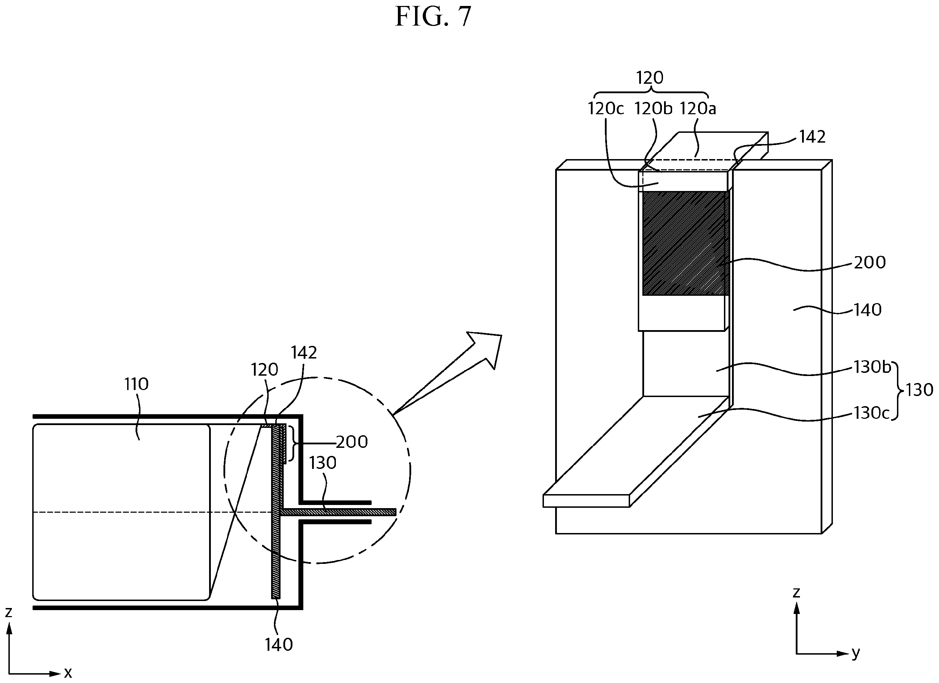

FIG. 7 is a schematic perspective view illustrating an enlarged view of an electrode tab end portion, an electrode lead, and an insulating member of a secondary battery illustrated in FIG. 2.

Referring to FIG. 7, in a secondary battery 100 according to an example embodiment, an electrode tab end portion 120 may be configured to connect an electrode assembly 110 and an electrode lead 130 with an insulating member 140 in between in an internal space (for example, the electrode connection portion 158 of FIG. 2) of the battery case 150.

For example, the electrode tab end portion 120 may be coupled to each of the electrode lead 130 and the insulating member 140.

According to an example embodiment, the electrode lead 130 and the insulating member 140 may be coupled to each other and may form an integral lead member. For example, the electrode lead 130 may be in an L shape.

For example, at least a portion (for example, a second portion 130b) of the electrode lead 130 and one surface (for example, a first surface) of the insulating member 140 may be coupled to each other and may form the integral lead member. At this point, at least a portion of the electrode lead 130 may be coupled to the insulating member 140 on one surface of the insulating member 140, or inserted into a groove portion formed on one surface of the insulating member 140 to be coupled to the insulating member 140.

For example, the electrode lead 130 may include a first portion 130a protruding outside from an internal space of the battery case 150, the second portion 130b coupled to the insulating member 140, and a third portion 130c between the first portion 130a and the second portion 130b. For example, the second portion 130b may be parallel to the insulating member 140, and may form a predetermined angle with the first portion 130a. In an example embodiment, the second portion 130b may be disposed to be substantially perpendicular to the first portion 130a, and in addition, may be disposed to form various angles such as 80 degrees and 100 degrees.

Meanwhile, the second portion 130b of the electrode lead 130 may be coupled to the insulating member 140 in a region in which an end of the second portion 130b corresponds to an opening 142 of the insulating member 140.

The electrode lead 130 and the insulating member 140 may be coupled in a various ways (for example, bonding with an adhesive tape, bonding by mechanical coupling, or bonding by welding), and such an integral lead member may be coupled to the electrode tab end portion 120 again.

For example, the electrode tab end portion 120 may be coupled in a region overlapping with the second portion 130b of the electrode lead 130 constituting the integral lead member.

As an example, when the second portion 130b of the electrode lead 130 is inserted into the groove portion of the insulating member 140, and a step difference between the electrode lead 130 and the insulating member 140 is removed or minimized, the electrode tab end portion 120 may be coupled in a region in which the electrode lead 130 overlaps with the second portion 130b within a depth of the groove portion of the insulating member 140. At this point, a welding region 200 in which the electrode tab end portion 120 and the electrode lead 130 are welded may be exposed to the outside, which ensures the stability of the welded state and allows easy inspection of the welded state.

For example, the electrode tab end portion 120 and the electrode lead 130 may serve to connect an electrode of the electrode assembly 110 and an external circuit. At this point, at least a portion of the electrode tab end portion 120 and the electrode lead 130 may be coupled to each other by a welding process within a range overlapping with each other. For example, a third region 120c of the electrode tab end portion 120 and the second portion 130b of the electrode lead 130 may be coupled to each other by welding within an overlapping range. At this point, a region in which the electrode tab end portion 120 and the electrode lead 130 are welded within the overlapping range may be referred to as a welding region 200.

Meanwhile, as the second portion 130b of the electrode lead 130 is disposed below the opening 142 of the insulating member 140, the welding region 200 may be formed on a region below the opening 142. The welding region 200 may be a region in which the third region 120c of the electrode tab end portion 120 and the second portion 130b of the electrode lead 130 are completely overlapped, or partially overlapped.

In an example embodiment of the present disclosure, the electrode tab 112 of the electrode assembly 110 and the electrode lead 130 may be bonded to each other by at least one welding process. For example, after the electrode tab end portion 120 is formed as the plurality of electrode tabs 112 are coupled to each other by a method such as welding (for example, a first welding process), the electrode tab end portion 120 and the electrode lead 130 may be coupled to each other by a method such as welding (for example, a second welding process). As another example, the plurality of electrode tabs 112 and the electrode lead 130 that are not coupled to each other may be bonded to each other at once by only a single welding process (for example, a second welding process) at the welding region 200.

The electrode tab end portion 120 and the insulating member 140 may be coupled to each other. However, the electrode tab end portion 120 and the insulating member 140 may not be directly coupled by a method such as welding.

The electrode tab end portion 120 and the insulating member 140 may be coupled in a way in which the electrode tab end portion 120 is accommodated in and engaged with the opening 142 of the insulating member 140. The electrode tab end portion 120 may be accommodated in the opening 142 of the insulating member 140, but may not be constrained by the opening 142, and may move within the opening 142. As a result, a position in which the electrode tab end portion 120 is accommodated in the opening 142 may vary. For example, the first region 120a of the electrode tab end portion 120 may be accommodated in the opening 142 of the insulating member 140. A portion of the electrode tab end portion 120 coupled to the second portion 130b of the electrode lead 130 may be bent with respect to the opening 142. At this point, a bent portion may be included in the second region 120b of the electrode tab end portion 120.

Meanwhile, a width of the electrode tab end portion 120 may be configured to correspond to a width of the opening 142 of the insulating member 140 so that the electrode tab end portion 120 is stably accommodated in the opening 142 of the insulating member 140.

Meanwhile, in an example embodiment of the present disclosure, the coupling method between the electrode tab end portion 120 and the electrode lead 130 and between the electrode lead 130 and the insulating member 140 may be generally welding, but the method is merely an example, and each element may be coupled by a different random method.

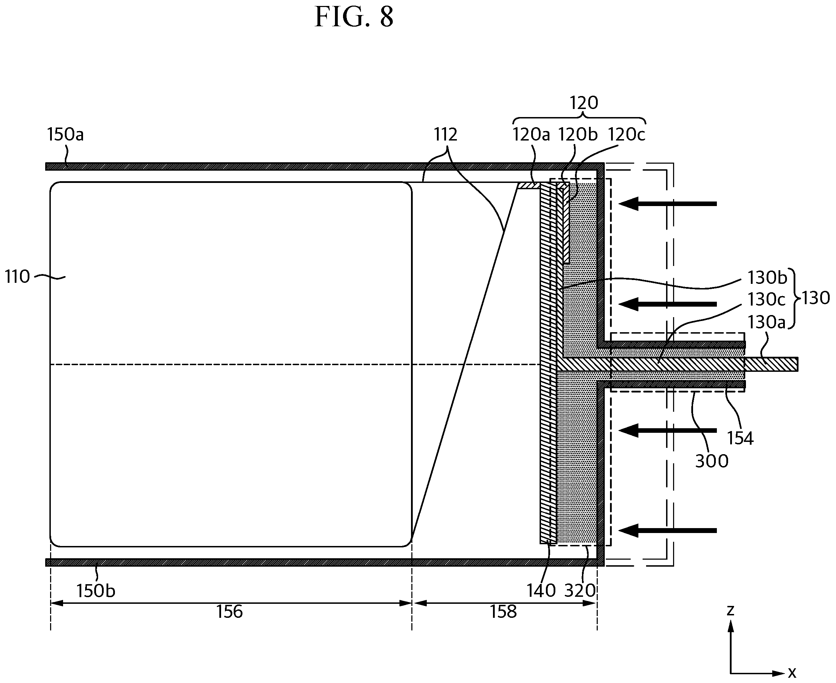

FIG. 8 is a schematic cross-sectional view of a secondary battery according to an example embodiment of the present disclosure. For example, FIG. 8 may be a cross-sectional view to illustrate another example embodiment of a sealing region illustrated in FIG. 2.

Referring to FIG. 8, unlike the sealing region 300 illustrated in FIG. 2, sealing regions 300 and 320 according to an example embodiment of the present disclosure in which an element within the secondary battery 100 and the battery case 150 are sealed may be configured to be more extensive region than the sealing region 300 illustrated in FIG. 2.

For example, the sealing portion may include a first sealing region 300 and a second sealing region 320.

The first sealing region 300 may refer to a region in which a third portion 130c of an electrode lead 130 and a sealing portion 154 of the battery case 150 are sealed.

For example, the electrode lead 130 may protrude to the outside of the battery case 150 through the first sealing region 300. At this point, a protruding electrode lead 130 may be a first portion 130a of the electrode lead 130. The third portion 130c of the electrode lead 130 may be positioned on the first sealing region 300, and an outer perimeter of the third portion 130c may be sealed at the sealing portion 154 of an upper case 150a and a lower case 150c and at the first sealing region 300.

The second sealing region 320 may refer to a region sealed between one surface (for example, a first surface) of an insulating member 140 and one surface of the battery case 150 are sealed. At this point, the one surface of the insulating member 140 and the one surface of the battery case 150 may be parallel to one surface of the electrode assembly 110. For example, the second sealing region 320 may be an area sealed to include an electrode tab end portion 120 and the electrode lead 130 that are disposed between the insulating member 140 and the battery case 150.

For example, the second sealing region 320 may include a region in which an upper portion of the insulating member 140 and the upper case 150a are sealed and a region in which a lower portion of the insulating member 140 and the lower case 150b are sealed. At this point, a third region 120c of the electrode tab end portion 120 and a second portion 130b of the electrode lead 130 that are coupled together may be sealed together in a region in which the upper portion of the insulating member 140 and the upper case 150a are sealed. However, as the electrode tab end portion 120 and the electrode lead 130 are conductive members, a separate additive may be added to the second sealing region 320 to prevent an electrical short circuit between elements and to seal the elements.

In the second sealing region 320, sealing an internal element of the secondary battery 100 and the battery case 150 may provide various advantages. For example, when one surface (for example, a first surface) of the insulating member 140 and one surface of the battery case 150 parallel to each other are sealed in the second sealing region 320, a width between the one surface of the insulating member 140 and the one surface of the battery case 150 including the sealing portion 154 may be further reduced. In this way, a space of the electrode connection portion 158 within the battery case 150 may decrease, and as a result, space efficiency of the electrode connection portion 158 may increase, and the energy density of the secondary battery 100 may be improved.

For example, as the secondary battery 100 may also be sealed in the second sealing region 320, the electrode assembly 110 may be protected well from an external shock. Particularly, as the insulating member 140 are sealed and fixed together with the battery case 150, the insulating member 140 may serve as a support structure more effectively. In addition, as an integral member in which the electrode tab end portion 120, the electrode lead 130, and the insulating member 140 are coupled to each other may be coupled to and sealed together with one surface of the battery case 150, an internal short circuit within the secondary battery 100 that may occur due to an external shock may be prevented.

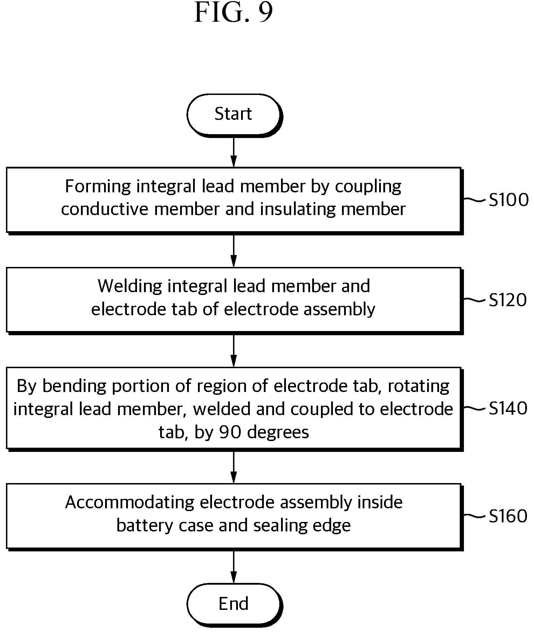

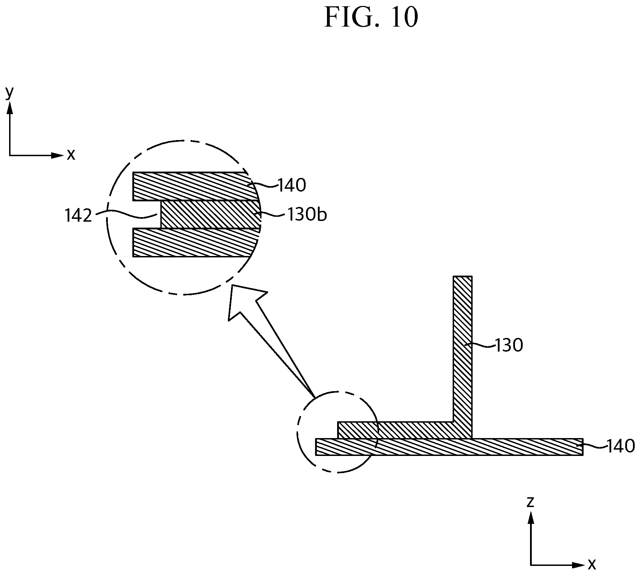

FIG. 9 is a flowchart illustrating a method of manufacturing a secondary battery according to an example embodiment of the present disclosure. FIGS. 10 to 13 are diagrams sequentially illustrating a method of manufacturing a secondary battery according to an example embodiment of the present disclosure.

Hereinafter, each operation of a method of manufacturing the secondary battery 100 according to an example embodiment of the present disclosure will be described with reference to FIGS. 9 to 13.

The method of manufacturing the secondary battery 100 according to an example embodiment of the present disclosure may include operation S100, in which the electrode lead 130 and the insulating member 140 are coupled to form an integral lead member.

In an example embodiment, the integral lead member may be configured as an assembly of the electrode lead 130 and the insulating member 140. For example, the electrode lead 130 may be a conductive member and a configuration to electrically connect the electrode assembly 110 and an external circuit, and the insulating member 140 may be a configuration to prevent an electrical short circuit within the electrode lead 130 and the secondary battery 100.

For example, the electrode lead 130 may be coupled to one surface (for example, a first surface) of the insulating member 140. At this point, at least a portion of the electrode lead 130 may be coupled to the insulating member 140 on the one surface of the insulating member 140, or inserted into a groove portion formed on the one surface of the insulating member 140 to be coupled to the insulating member 140. At this point, depending on a thickness of the insulating member 140 and a depth of the groove portion formed on the insulating member 140, a step difference between the insulating member 140 and the electrode lead 130 may vary. The step difference may affect a step difference formed during a coupling of the integral lead member and the plurality of electrode tabs 112 or the electrode tab end portion 120.

For example, the electrode lead 130 may be bonded to the one surface of the insulating member 140. For example, the electrode lead 130 and the insulating member 140 may be bonded to each other by a predetermined adhesive, and in addition to an adhesive, various materials and methods may bond the electrode lead 130 and the insulating member 140.

Meanwhile, the electrode lead 130 may be in an L shape. For example, the electrode lead 130 in an L shape may include a first region bonded to the insulating member 140 and a second region extending in a vertical direction from the bonded region.

For example, the insulating member 140 may be a plastic insulating structure.

Meanwhile, in an example embodiment, the insulating member 140 may include the opening 142 formed on one end of the insulating member 140. For example, the electrode lead 130 may be bonded to the insulating member 140 at a position corresponding to the opening 142 of the insulating member 140 (for example, at a lower portion of the opening 142) by a method such as welding.

Next, the method of manufacturing the secondary battery 100 according to an example embodiment may include operation S120, in which the integral lead member is welded to the electrode tab 112 of the electrode assembly 110.

The welding between the electrode tab 112 and the integral lead member may be performed on the one surface (for example, the first surface) of the insulating member 140 to which the electrode lead 130 in an L shape is bonded. For example, the electrode tab 112 welded to the integral lead member may be a group of the plurality of electrode tabs 112 extending from a plurality of electrodes of the electrode assembly 110. As another example, the electrode tab 112 may refer to an electrode tab end portion 120 formed by the plurality of electrode tabs 112 gathering as one bundle and being coupled to each other by a method such as welding.

As what is illustrated in FIG. 11, the electrode tab end portion 120 may be formed when the plurality of electrodes gather on a top of the electrode assembly 110. A portion of the integral lead member may be put on a bottom surface of the electrode tab end portion 120 and may be welded in a range in which the electrode tab end portion 120 and the integral lead member overlap. The electrode tab end portion 120 may be welded to a portion of the electrode lead 130 in an L shape of the integral lead member and may be perpendicular to another portion of the electrode lead 130. In addition, the electrode tab end portion 120 may be parallel to the insulating member 140 of the integral lead member. At this point, a portion of the electrode tab end portion 120 to which the integral lead member is welded may correspond to the third region 120c of the electrode tab end portion 120, and a portion of the electrode lead 130 to which the second region 120b of the electrode tab end portion 120 is welded may correspond to the second portion 130b of the electrode lead 130.

Meanwhile, as an example, when the second portion 130b of the electrode lead 130 is inserted into a groove portion of the insulating member 140, and a step difference between the electrode lead 130 and the insulating member 140 is removed or minimized, the plurality of electrode tabs 112 or the electrode tab end portion 120 may be coupled in a region in which the electrode lead 130 overlaps with the second portion 130b within a depth of the groove portion of the insulating member 140.

Next, the method of manufacturing the secondary battery 100 according to an example embodiment of the present disclosure may include operation S140, in which a portion of a region of the electrode tab 112 is bent, and the integral lead member welded and bonded to the electrode tab 112 is rotated by 90 degrees.

For example, the secondary battery 100 according to an example embodiment may be formed by bending a portion of a region of the electrode tab 112 to improve space efficiency within the battery case 150 and rotating the integral lead member welded and coupled to the electrode tab 112 by 90 degrees to face one surface of the electrode assembly 110. At this point, the electrode tab 112 may refer to the electrode tab end portion 120 as described above.

For example, as what is illustrated in FIG. 11, when a portion of a region of the electrode tab end portion 120 is bent and the integral lead member rotates in a direction of an arrow, an element of the secondary battery 100 may be disposed as what is illustrated in FIG. 12. Through the bending, a horizontal length of the electrode tab end portion 120 and the integral lead member coupled together decreases, and space occupancy of the elements inside the battery case 150 may decrease more than before the bending.

In addition, through the bending, as the insulating member 140 is disposed between the electrode assembly 110 and the electrode lead 130, the insulating member 140 may prevent an electrical short circuit between the electrode assembly 110 and the electrode lead 130 and may serve as a support structure inside the secondary battery 100.

Meanwhile, as the electrode tab end portion 120 is bent, the electrode tab end portion 120 may be divided into the first region 120a connected to the electrode assembly 110 and the second region 120b, which is bent, and the third region 120c welded to the integral lead member. A portion of the first region 120a of the electrode tab end portion 120 may be accommodated in the opening 142 formed on the insulating member 140 when the integral lead member rotates, and the insulating member 140 may be positioned to be parallel to one surface of the electrode assembly 110.

Next, the method of manufacturing the secondary battery 100 according to an example embodiment may include operation S160, in which the electrode assembly 110 is accommodated inside the battery case 150 and an edge is sealed of the battery case 150.

In an example embodiment, the element (for example, the electrode assembly 110 and the integral lead member) inside the secondary battery 100 may be inserted into the accommodating portions 156 and 158 of the battery case 150, and subsequently, the bonding portion 152 of the upper case 150a and the lower case 150b may be bonded, and the sealing portion 154 of the battery case 150 may be sealed to form the secondary battery 100.

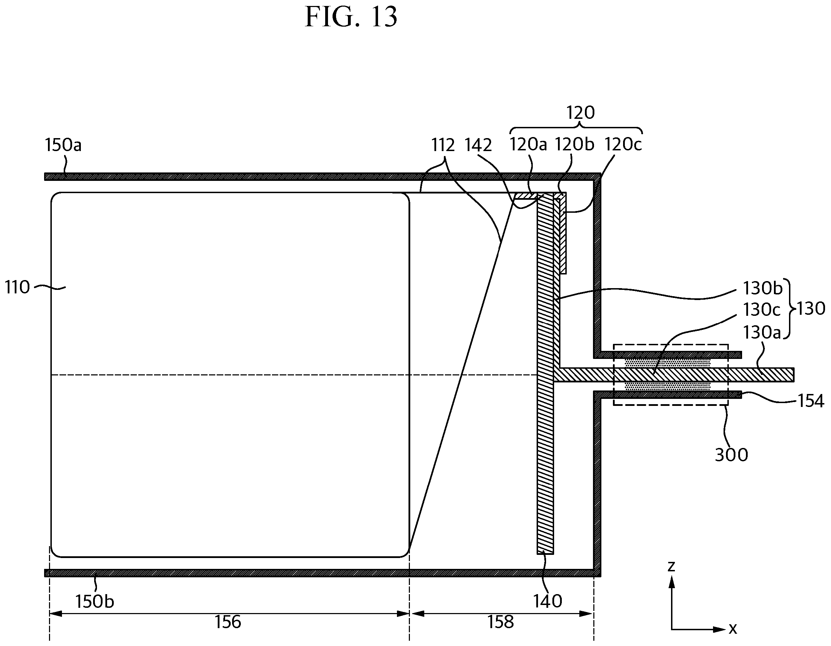

For example, referring to FIG. 13, inserting the element inside the secondary battery 100 according to an example embodiment of the present disclosure into the accommodating portions 156 and 158 of the battery case 150 may be inserting the elements inside the secondary battery 100 formed through operations S100 to S140 described above into the accommodating portions 156 and 158 of the battery case 150.

For example, as what is illustrated in FIG. 13, the accommodating portions 156 and 158 of the battery case 150 may be a space between an upper cup portion and the lower cup portion formed on the upper case 150a and the lower case 150b, and the accommodating portions 156 and 158 may accommodate a configuration in which the electrode assembly 110, the electrode tab end portion 120, and the integral lead member are coupled.

Bonding the bonding portion 152 of the upper case 150a and the lower case 150b according to an example embodiment of the present disclosure may be bonding each bonding portion 152 of the upper case 150a and the lower case 150b by a method such as welding so that elements accommodated inside the battery case 150 are not discharged to the outside and are not to be subjected to an external shock.

Referring to FIG. 13, sealing a portion of the integral lead member protruding outside the battery case 150 according to an example embodiment of the present disclosure and a sealing portion 154 of the battery case 150 may be sealing a portion of the integral lead member together with the sealing portion 154 of the battery case 150 in a first sealing region 300. At this point, a portion of the integral lead member may protrude outside passing through the first sealing region 300, and when a portion connected to an external circuit is not fixed, the portion may be vulnerable to an external shock. The integral lead member and the battery case 150 may be sealed in the first sealing region 300 to prevent vulnerability to the external shock.

In addition, sealing may include not only sealing the integral lead member and the sealing portion 154 in the first sealing region 300, but also sealing between the insulating member 140 and the battery case 150 in the second sealing region 320. In the process, as the electrode tab end portion 120 and the electrode lead 130, which are positioned between the insulating member 140 and the battery case 150, are sealed together, elements inside the battery case 150 may be more firmly fixed, and the internal space occupancy may be reduced.

Meanwhile, bonding the upper case 150a and the lower case 150b of the battery case 150 and sealing the integral lead member and the sealing portion 154 of the battery case 150 may be independently performed, or simultaneously performed.

A detailed example, including a desirable mode for performing the present disclosure, is described, but it is merely an example and is not limited thereto. It will be apparent to those skilled in the art that numerous other variations and modifications of the aforementioned system and technology, based on the technical spirit of the present disclosure, may be implemented in addition to the embodiments disclosed herein. It will be understood that other example embodiments may also be utilized, and structural and functional variations may be made without departing from the scope of the present disclosure. And differences associated with the variations and applications will be understood to fall within the scope of the present disclosure as defined by the following claims.

## Claims

1. A secondary battery, comprising:
an electrode assembly including a plurality of electrodes, an electrode tab extending from at least one of the plurality of electrodes, and a separator interposed between the plurality of electrodes;
an electrode lead electrically connected to the electrode tab; and
an insulating member including a first surface facing the electrode lead and a second surface facing the first surface, and disposed between the plurality of electrodes and the electrode lead,
wherein the insulating member includes an opening through which at least a portion of the electrode tab between the first surface and the second surface passes.

2. The secondary battery of claim 1,
further comprising a battery case that accommodates the electrode assembly and has a sealing portion formed at an edge thereof, and
wherein the electrode lead comprising:
a first portion protruding outside the battery case;
a second portion disposed perpendicularly to the first portion inside the battery case; and
a third portion overlapping with the sealing portion of the battery case.

3. The secondary battery of claim 2,
wherein the second portion includes a region overlapping with the electrode tab, and
wherein the region in which the second portion and the electrode tab overlap is coupled to each other by a single welding process.

4. The secondary battery of claim 3,
wherein the region in which the second portion and the electrode tab overlap is
disposed in a direction perpendicular to the first portion by being bent at a position corresponding to the opening of the insulating member after the welding process.

5. The secondary battery of claim 2,
wherein the insulating member is disposed in a direction perpendicular to the first portion and forms an integral lead member by being coupled to one surface of the second portion.

6. The secondary battery of claim 1,
wherein the insulating member has a size and a shape corresponding to a cross-sectional portion of the electrode assembly.

7. The secondary battery of claim 1, further comprising
a battery case that accommodates the electrode assembly and has a sealing portion formed at an edge thereof,
wherein the insulating member, the electrode tab, and a portion of the electrode lead welded and coupled to the electrode tab are positioned inside the battery case, and
wherein another portion of the electrode lead is disposed outside the battery case.

8. The secondary battery of claim 1,
wherein the insulating member includes a groove portion in which the electrode lead is accommodated at least partially, and
wherein at least a portion of the electrode tab is electrically coupled to the electrode lead at a position corresponding to the groove portion.

9. The secondary battery of claim 8,
wherein a depth of the groove portion is greater than a thickness of the electrode lead.

10. The secondary battery of claim 1,
wherein the thickness of the electrode lead is smaller than a thickness of the insulating member.

11. A method of manufacturing a secondary battery, comprising:
forming an integral lead member by coupling an electrode lead and an insulating member;
positioning an electrode tab of an electrode assembly to pass through an opening formed on one side of the insulating member;
welding the integral lead member to an electrode tab of an electrode assembly;
rotating the integral lead member, which is welded and coupled to the electrode tab, by 90 degrees through bending a portion of a region of the electrode tab; and
disposing the electrode assembly inside a battery case and sealing an edge of the battery case.

12. The method of manufacturing a secondary battery of claim 11,
wherein the insulating member includes a first surface coupled to the electrode lead and a second surface facing the first surface,
wherein the welding includes welding a portion in which the electrode tab, which passes through the opening, overlaps with the integral lead member on the first surface.

13. The method of manufacturing a secondary battery of claim 11,
wherein the rotating the integral lead member, which is welded and coupled to the electrode tab, by 90 degrees includes
rotating the integral lead member, which is welded and coupled to the electrode tab, by 90 degrees in a direction toward the electrode assembly by bending the electrode tab with respect to the opening accommodating the electrode tab.

14. The method of manufacturing a secondary battery of claim 11,
wherein the sealing includes
sealing the edge of the battery case in a state in which a portion of the integral lead member protrudes outside the battery case.
